# EUROPEAN PATENT APPLICATION

(11) **EP 1 547 761 A1**
(43) Date of publication of application: **29.06.2005**
(21) Application number: 03756599.1
(22) Date of filing: 18.09.2003
(51) Int. Cl.: B32B 3/28

(54) **CORRUGATED ENGINEERING PLASTIC CARDBOARD**

(30) Priority: 20.09.2002 JP 2002274914; 24.01.2003 JP 2003016077
(71) Applicant: Nagoya Oilchemical Co., Ltd., Tokai-shi, Aichi 476-0001 (JP)
(72) Inventor: OGAWA, Masanori c/o Nagoya Oilchemical Co., Ltd., Tokai-shi, Aichi 476-0001 (JP); ITO, Kuninori c/o Nagoya Oilchemical Co., Ltd., Tokai-shi, Aichi 476-0001 (JP)
(74) Representative: VOSSIUS & PARTNER
(86) International application number: PCT/JP2003/011943
(87) International publication number: WO 2004/026573

(57) **Abstract**

The object of the present invention is to provide an engineering plastic cardboard having excellent heat resistance. Said engineering plastic cardboard(1) consists of a core member(2), and covering member(s)(3) covering one or both side(s) of said core member(2), wherein at least said core member(2) is made of an engineering plastic such as polyphenylene ether, or the like, or a polymer alloy of said engineering plastic and thermoplastic resin such as polypropylene, or the like, or a polymer alloy of said engineering plastic, thermoplastic resin, and a rubber-like material.

## Description

### FIELD OF THE INVENTION

The present invention relates to an engineering plastic cardboard.

### BACKGROUND OF THE INVENTION

Up to now, cardboard made of paper has been used for many purposes such as a casing material for packing, shock absorbing material to reduce impact, sound absorbing member to soundproof and the like, and many kinds of paper cardboard have been provided thus far.

Further, a plastic cardboard made of a thermoplastic resin, such as polypropylene, polyvinylchloride or the like has been also provided. Cardboard made of paper is light but difficult to mold into shapes having a curved face, so that there is a problem in that the use of said cardboard is limited.

Further, said plastic cardboard, made of thermoplastic resin, has good moldability, but poor heat resistance, so that there is a problem in that said plastic cardboard can not be used under high temperatures.

The object of the present invention is to provide a cardboard having good heat resistance and moldability.

### DISCLOSURE OF THE INVENTION

To solve said problems the present invention provides an engineering plastic cardboard consisting of a core member(2) and covering member(s)(3) covering one or both side(s) of said core member(2), wherein at least said core member(2) is made of an engineering plastic, or a polymer alloy of said engineering plastic and thermoplastic resin, or a polymer alloy of said engineering plastic, said thermoplastic resin, and a rubber-like material.

Said engineering plastic of said engineering plastic cardboard(1) is one or more kind(s) of plastic selected from a group of polyamide(PA), polyester(PE), polyacetal(POM), polycarbonate(PC), polyethylene terephthalate (PET), polybutylene terephthalate(PBT), polysulfone(PSF), polyethersulfone(PES), polyphenylene ether(PPE), modified polyphenylene ether(Modified PPE), polyphenylene sulfide(PPS), polyarylate(PAR), polyether-etherketone(PEEK), polyamideimide(PAI), polyimide(PI), polyetherimide(PEI), polyaminobismaleimide, methylpentene copolymer(TPX), crystalline polyester and stereoregular polyethylene.

Further, said thermoplastic resin is made from one or more kind(s) of plastic(s) selected from a group of polystyrene, polyamide, and polypropylene.

Said rubber-like material is preferably styrenic elastomer.

Still further, a compatibility aid agent may be added to said polymer alloy.

Commonly, said core member(2) may be a corrugated sheet, honeycomb material, or a honeycomb material having a grid structure or a molded sheet forming a number of projections(4), or the like.

Still further, said covering member(3) is sometimes made of a porous material, and/or made of heat resistant material, and said heat resistant material is preferably made from a carbon fiber and/or aramid fiber sheet.

### BRIEF DESCRIPSION OF THE DRAWINGS

Fig.1 is a perspective view of an engineering plastic cardboard to be used as a sound absorbing material.

Fig.2 is an A-A sectional view of the sound absorbing material shown in Fig.1.

Fig.3 is a perspective view of a molded sheet.

Fig.4 is a B-B sectional view of the molded sheet shown in Fig.3.

Fig.5 is a perspective view of a core member consisting of a corrugated sheet.

Fig.6 is a perspective view of a core member consisting of a honeycomb body.

Fig.7 is a perspective view of a core member consisting of a honeycomb body including a grid structure.

Fig.8 is a perspective view of a premolded sheet.

Fig.9 is a C-C sectional view of the premolded sheet shown in Fig.8.

Fig.10 is a partial sectional view of a premolded sheet from another example.

Fig.11 is a partial sectional view of a premolded sheet from still another example.

Fig.12 is a perspective view of a premolded sheet from another example.

Fig.13 is a perspective view of a premolded sheet from another example.

Fig.14 is a partial sectional view of a cardboard comprising a core member consisting of a corrugated sheet.

Fig.15 is an explanatory drawing of a manufacturing method for a core member from another example.

Fig.16 is a partial sectional view of a core member both the upper and lower sides of which are each covered with a porous layer.

Fig.17 is a partial sectional view of a cardboard (a sound absorbing material) comprising the core member shown in Fig.14.

Fig.18 is a partial sectional view of a cardboard (a sound absorbing material) comprising a core member, comprised of projections having flat upper face.

Fig. 19 is a perspective view with a partial cutaway of the sound absorbing material of the prior art.

Fig.20 is a perspective view with a partial cutaway of the sound absorbing material of another prior art.

Fig.21 is a perspective view with a partial cutaway of the cardboard comprising the core member consisting of a honeycomb body.

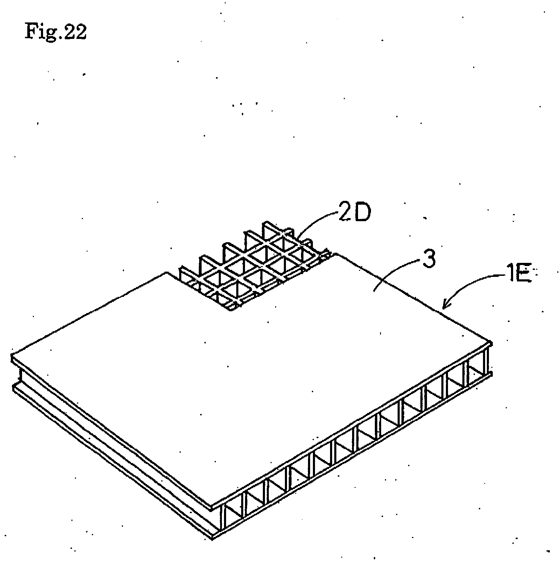

Fig.22 is a perspective view with a partial cutaway of the cardboard comprising the core member shown in Fig. 7.

### Explanation of References

- 1, 1A, 1B, 1C, 1D: an engineering plastic cardboard
- 2: a core member
- 2A: a molded sheet (a core member)
- 2B: a core member consisting of a corrugated sheet
- 2C: a core member consisting of a honeycomb body
- 2D: a core member consisting of a grid structure
- 2E: a premolded sheet (a core member)
- 3: a covering member
- 4: projections
- 5: a top side
- 6: tube-like parts
- 7: a porous layer
- 8,9: a base sheet
- 8A,9A: slits
- 11,11A: a sound absorbing material
- 12,12A: a core member
- 13,13A: a covering member

### DETAILED DESCRIPTION AND PREFERRED EMBODIMENT OF THE INVENTION

The present invention is illustrated below in detail.

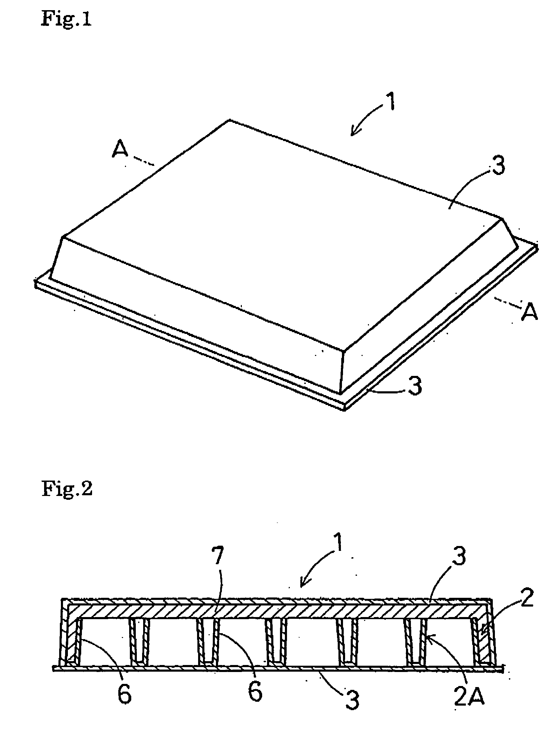

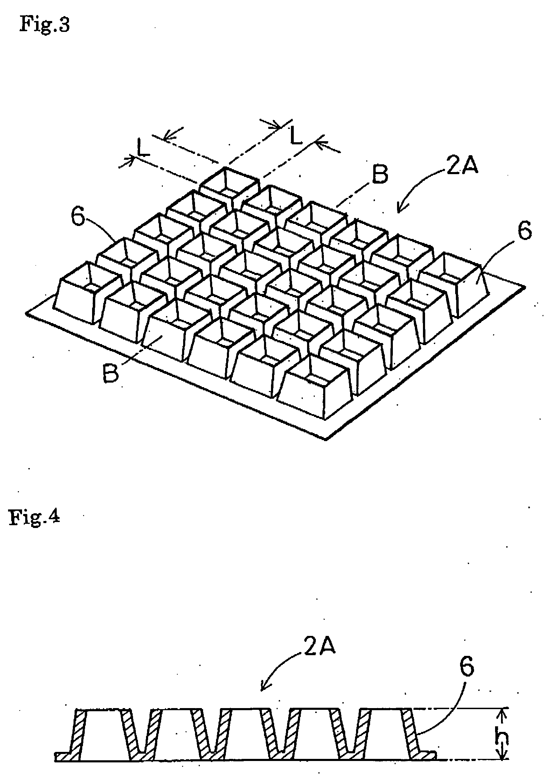

An engineering plastic cardboard(1) (hereinafter refered to as cardboard(1)) consists of a core member(2), and a covering member(3) which covers both sides of said core member(2) (see Figs.1 to 4).

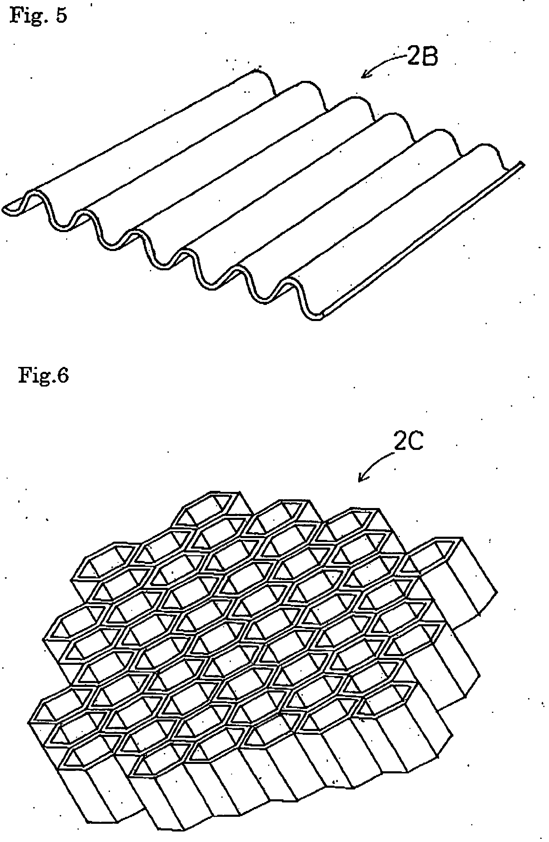

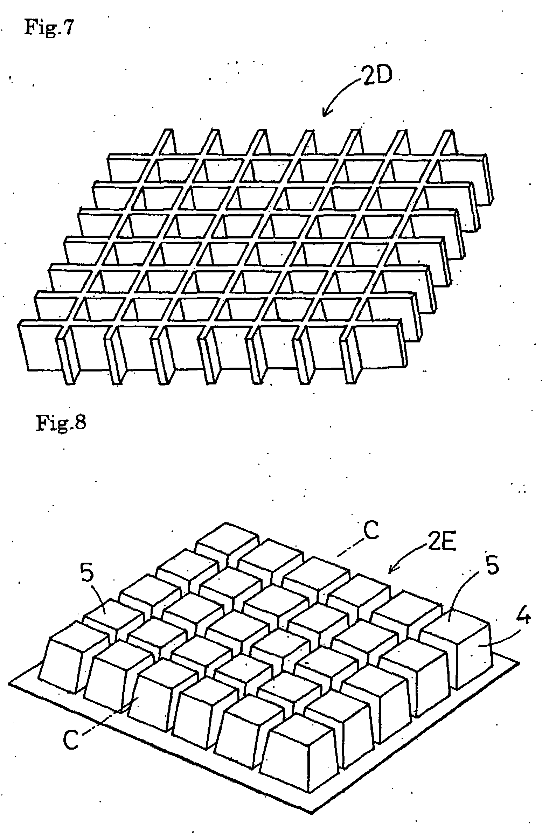

Said core member(2) of said cardboard(1) of the present invention consists of a molded sheet(2A), which forms a number of tube-like parts(6). In the present invention, said core member(2) may consist of a corrugated sheet(2B) as shown in Fig.5, a honeycomb body(2C), as shown in Fig.6, or the like. Further, in the present invention, said honeycomb body may include a grid structure(2D) as shown in Fig.7.

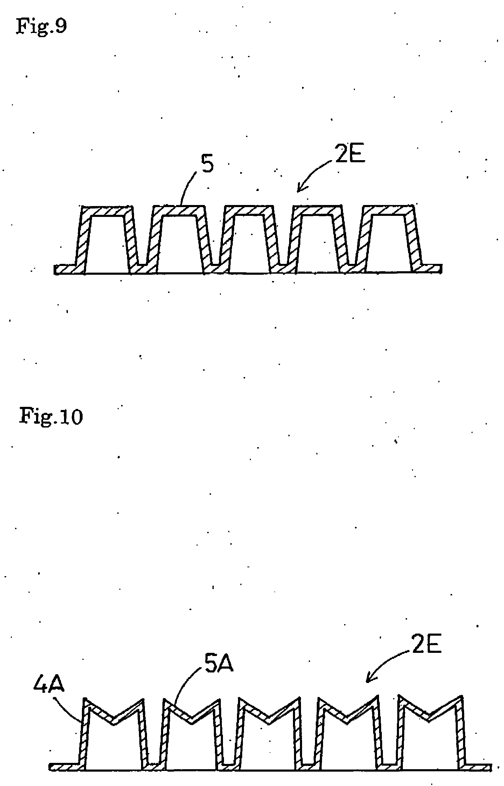

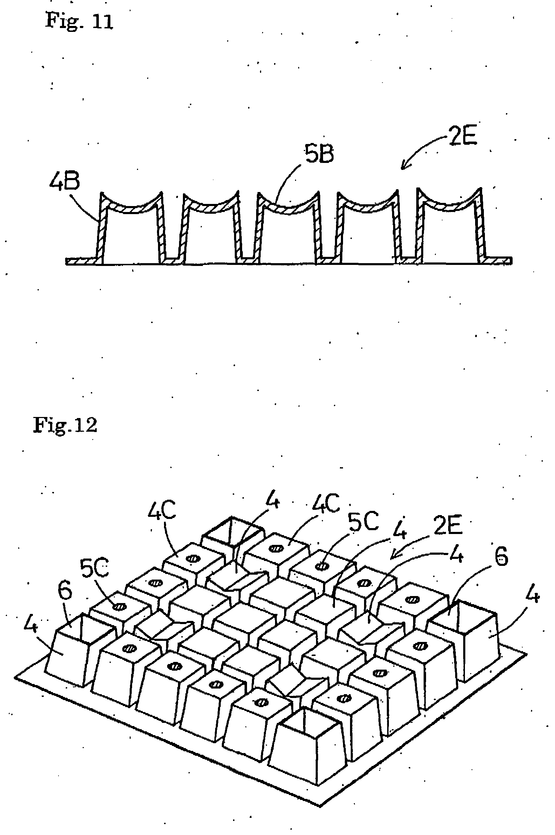

Said molded sheet(2A) is manufactured by cutting the topsides(5) of a number of projections(4) of a premolded sheet(2E) but in the present invention, said premolded sheet(2E), itself may be used as a core member(2) for said cardboard(1) of the present invention. In this example, said projections(4) have a flat upper face as shown in Figs.8 and 9, but in the present invention, said projection may include projection(4A) whose upper face(5A) has a V-shaped cross section as shown in Fig.10, projection(4B) whose upper face(5B) has a U-shaped cross section as shown in Fig.11, and projection(4C) whose upper face has a circlar opening(5C) as shown in Fig.12, or the like.

Further, projections(4) formed on said premolded sheet(2E) do not always necessarily have the same shapes.

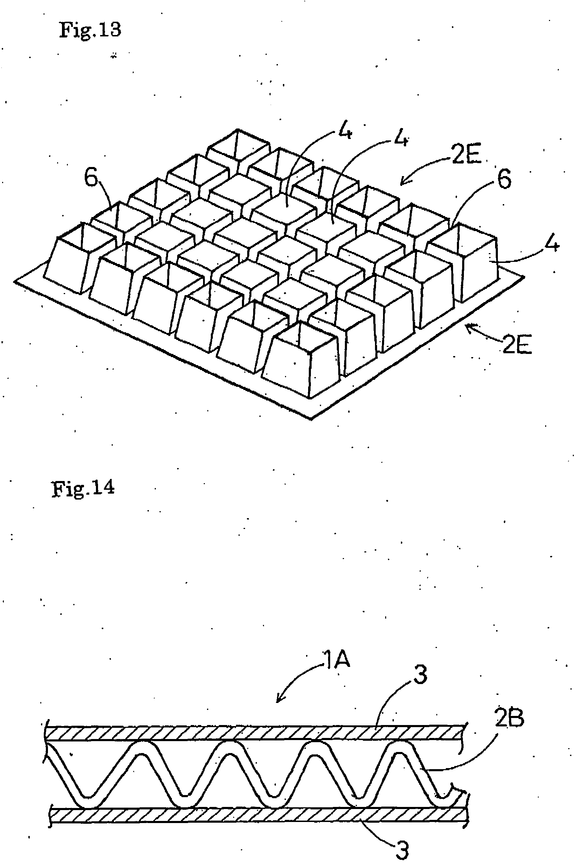

For instance, the topsides of some projections(4) (projections(4) arranged around the circumference of said premolded sheet(2E)), may be cut into tube-like parts(6), and the other projections(4) having a flat upper face may be arranged inside said circumference of tube-like parts as shown in Fig.13, or projections(4) of said premolded sheet(2E) may have different shapes from each other as shown in Fig.12. In the present invention, a tube-like part(4) means a tuberous projection(6).

The shape of said core member(2) may be selected based upon its purpose of use or the like. For instance, in a case where said cardboard(1) of the present invention is used as a sound absorbing member or a sound-proofing member, a shape having an excellent sound absorbing effect etc. shall be selected.

Said core member(2) of said cardboard(1) of the present invention is made of engineering plastic, a polymer alloy of engineering plastic and thermoplastic resin, or a polymer alloy of engineering plastic, thermoplastic resin, and a rubber like material.

Said engineering plastic may be thermoplastic engineering plastic such as polyamide(PA), polyester(PE), polyacetal(POM), polycarbonate(PC), polyethylene terephthalate(PET), polybutylene terephthalate (PBT), polysulfone(PSF), polyethersulfone(PES), polyphenylene ether(PPE), modified polyphenylene ether(Modified PPE), polyphenylene sulfide(PPS), polyarylate(PAR), polyether-etherketone(PEEK), polyamideimide(PAI), polyimide(PI), polyetherimide(PEI), polyaminobismaleimide, methylpentene copolymer(TPX), or the like; liquid crystalline engineering plastic such as polyaryl ether, or the like; fluoride resin compression moldable engineering plastic such as polytetrafluoroethylene(PTFE), or the like; crystalline polyester such as amorphous polymer, polyaminobismaleimide, bismaleimide-tryazine family curable aromatic polyimide, crystalline terephthalate, crystalline polybutylene terephthalate or the like; stereoregular polystyrene such as syndiotactic polystyrene, isotactic polystyrene, or the like, with said engineering plastic having a melting point higher than 200°C being preferable. Said engineering plastic may be used singly, or two or more kinds of engineering plastic may be used together.

Said modified PPE is such as a PPE in which styrenic monomer(s) such as styrene, α-methylstyrene, α-ethylstyren, α-methylvinyltoluene, α -methyldialkylstyrene, o, m or p-vinyltoluene, o-ethylstyrene, p-ethylstyrene, 2,4-dimethylstyrene, o-chlorostyrene, p-chlorostyrene, o-bromstyrene, 2,4-dichlorostyrene, 2-chloro-4-methylstyrene, 2,6-dichlorostyrene, vinylnaphthalene, vinylanthracene or the like, is(are) graft-copolymerized, or polymer alloy in which styrenic resin(s) such as polystyrene, styrene-acrylonitrile resin, acrylonitrile-butadiene-styrene resin (ABS), high impact polystyrene(HIPS) or the like, is(are) mixed into said PPE.

In a case where said core member(s) of the present invention is made of a polymer alloy of said engineering plastic and said thermoplastic resin, said thermoplastic resin used in said polymer alloy may be such as polyolefin family resin such as polyethylene, polypropylene, ethylene-propylene copolymer, ethylene-vinyl actetate copolymer, or the like; polystyrene family resin such as polystyrene, styrene-acrylonitrile resin, acrylonitrile-butadiene-styrene resin, or the like; polyamide family resin such as poly caprolactam(nylon 6), polyhexamethylene adipamide (nylon 66), polyhexamethylene sebacic acid amide (nylon 610), polyundeca 1 lactam (nylon 11), polydodeca 1 lactam (nylon 12), or the like, or a mixture of two or more kinds of said thermoplastic.

Further, in a case where said core member(2) of the present invention is made of a polymer alloy of engineering plastic, thermoplastic resin and rubber-like material, said rubber like material used in said polymer alloy may be such as synthetic rubber such as acrylic rubber, butyl rubber, silicone rubber, urethane rubber; fluoride type rubber, polysufide type rubber, graft modified rubber, butadiene rubber, isoprene rubber, chloroprene rubber, polyisobutylene rubber, polybutene rubber, isobutene-isoprene rubber, acrylate-butadiene rubber, styrene-butadiene rubber, acrylonitrile-butadiene rubber, pyridine-butadiene rubber, styrene-isoprene rubber, acrylonitrile-chloroprene rubber, styrene-chloroprene rubber or the like; natural rubber; a styrenic elastomer such as styrene-butadiene-styrene block copolymer(SBS), a styrene-isoprene-styrene block copolymer (SIS), α -methylstyrene-butadiene-α-methylstyrene block copolymer (α -MeS-Bd-MeS), α-methylstyrene-isoprene-α-methylstyrene block copolymer, styrene-hydrogenated polyolefin-styrene block copolymer (SEBS,SEPS); polyolefinic elastomer, polyurethane group elastomer, polyester group elastomer polyamide group elastomer, or the like. Said rubber like material may be used singly or two or more kinds of said rubber-like materials may be used together.

Further, a compatibility aid agent may be added to said polymer alloy to improve the compatibility of each component.

Said compatibility aid agent is made of a chemical compound having compatibility with each of the components in said polymer alloy, providing each component of said polymer alloy with a uniform mixing state, and intermediating between said components each other. Accordingly, the character of each component is utilized effectively, so that said polymer alloy has a good heat resistance and moldability, and can easily manufactured into a core member having a complex shape, by such as vacuum forming.

For instance, as compatibility aid agent for polymer alloy of aromatic engineering plastic such as PPE, modified PPE, PPS or the like, and polyolefin such as polypropylene or the like(including polymer alloy containing rubber-like material), for instance, block or graft copolymer wherein PPE and polypropylene are chemically bonded, block or graft copolymer of polypropylene and polystyrene, block or graft copolymer of PPE and ethylenebutene copolymer, hydrogenated diblock copolymer or triblock copolymer of alkenyl aromatic compound(such as styrene) and conjugated diene compound (such as butadiene, isoprene) or the like, are used.

Further, as compatibility aid agent for polymer alloy of said aromatic engineering plastic and polyamide resin(including polymer alloy containing rubber-like material), for instance(a) compound containing both(i) ethylenical carbon-carbon double bond or carbon-carbon triple bond and (ii) carboxylic acid, acid anhydride, acid amide, imide, carboxylic ester, amine or hydroxyl group, (b) liquid diene polymer, (c) epoxy compound, (d) polycaboxylic acid or derivative thereof, (e) oxidized polyolefin wax, (f)compound containing acryl functional group, (g)chloroepoxytriazine compound, and(h) trialkyl amine salt of maleic acid or fumaric acid may be used.

Detailed description of said compatibility aid agents(a) to (h) are shown in TOKKAIHEI 09-12497, further, each compatibility aid agent(a) to (h) is disclosed in US4,315,086(the document which refers to (a), (b) and (c)), US4,873,286(the document which refers to (d)), US4,659,760(the document which refers(e)), US4,642,358 and US4,600,741(the documents which refer to (f)), US4,895,945, US5,096,979, US5,089,566 and US5,041,504(the documents which refers to (g)), US4,755,566(the document which refers to (h)).

Usually, said compatibility aid agent is added to said polymer alloy in an amount of 0.1 to 60% by weight. Many kinds of additives may be added to said engineering plastic, said polymer alloy of engineering plastic and thermoplastic resin, or said polymer alloy of engineering plastic, thermoplastic resin, and rubber-like material so far as the object of the present invention is not spoiled.

Said additives may be such as calcium carbonate, magnesium carbonate, barium sulphate, calcium sulphate, calcium sulfite, calcium phosphate, calcium hydroxide, magnesium hydroxide, aluminum hydroxide, magnesium oxide, titanium oxide, iron oxide, zinc oxide, alumina, silica, diatom earth, dolomite, gypsum, talc, clay, asbestos, mica, calcium, silicate, bentonite, white carbon, carbon black, iron powder, aluminum powder, glass powder, stone powder, synthetic resin powder, blast furnace slag, fly ash, cement, zirconia powder, linter, linen, sisal, wood flour, coconut flour, walnut flour, starch, wheat flour, a natural fiber such as cotton, hemp, wool asbestos, kenaf or the like; an organic synthetic fiber such as polyamide fiber, polyester fiber, polyolefin fiber, acrylic fiber, vinyl chloride fiber, vinylidene chloride fiber or the like; semisynthetic fiber such as acetate fiber or the like, an inorganic fiber such as asbestos fiber, glass fiber, carbon fiber, ceramic fiber, metallic fiber, whisker or the like, a dye pigment, antioxidant, antistatic agent, crystallization agent, flame retardant, antiflaming agent, lubricant, age resister, ultraviolet absorber or the like.

Said additive may be used singly, or two or more kinds of said additives may be used together.

Said core member(2) of said cardboard(1) of the present invention may be made of foamed engineering plastic.

As shown in Fig.2, a porous layer(7) may be used to cover said core member(2) of said cardboard(1) of the present invention. The porous material used for said porous layer may include a fiber material such as a knitt, cloth, non woven fabric, felt, or a laminated fiber sheet thereof, said fiber material being made of, for example, an organic synthetic fiber such as a polyester fiber, polyethelene fiber, polyamide fiber, acryl fiber, urethane fiber, vinyl chloride fiber, vinyliden chloride fiber, acetate fiber, or the like; a natural fiber such as pulp, cotton, coconut fiber, hemp fiber, bamboo fiber, kenaf fiber or the like; an inorganic fiber such as a glass fiber, carbon fiber, ceramic fiber, asbestos fiber, stainless steel fiber, or the like; or a reused fiber made by unweaving scrapped textiles made of the above- mentioned fibers, said knit, cloth, non woven fabric felt or laminated fiber sheet thereof, being made of one or more kinds of the above-mentioned fibers; further said porous material may also be made from publicly known foamed material, such as, a plastic with an interconnecting cell structure, as well as foamed poleolefine such as foamed polyurethane having interconnecting cells(including both flexible and rigid foamed polyurethane), polyethylene, polypropylene or the like; a foamed amino family resin such as a foamed polyvinyl chloride, foamed polystyrene, malamine resin, urea resin or the like; a foamed phenol family resin such as a foamed epoxy resin, phenol family compound like a monovalent or polyvalent phenol; sintered plastic bead, or the like.

Synthetic resin may be impregnated in said porous layer(7). Said synthetic resin may be such as precondensate of thermosetteing resin such as melamine resin, urea resin ,phenol resin or the like, emulsion or water solution of thermoplastic resin or the like.

Further, a pigment or dyestuff, an antioxidant, antistatic agent, crystallization agent, flame retardant, antiflaming agent, lubricant, age resister, ultraviolet absorber may be added to said porous layer(7).

Said covering member(3), used in said cardboard(1) of the present invention, is attached to one or both side(s) of said core member(2), and said covering member(3) may be made of the same fiber material as used for said porous material of said porous layer(7), and may be made of engineering plastic sheet or film, thermoplastic resin sheet or film, foamed engineering plastic sheet or film, foamed thermoplastic resin sheet or film, or a metal foil such as aluminum foil or the like.

In a case where said covering member(3) or said porous layer(7) is made of fiber, a cardboard having a very high heat resistance may be obtained if synthetic fiber having a high heat resistance is used as the material for said covering member(3) or said porous layer(7). Said heat resistant fiber may be such as an inorganic fiber such as a glass fiber, carbon fiber, ceramic fiber, asbestos fiber, stainless steel fiber or the like or an organic fiber having a heat resistance preferably higher than 250°Csuch as aramid fiber such as a polymetaphenylene isophtalamide fiber, poly-p-phenylenetelephatalamide fiber or the like, a polyarylate fiber, polyetheretherketone fiber, polyphenylene sulfide fiber or the like. In particular, said carbon fiber is a useful inorganic fiber since said carbon fiber can be burned and the fine fiber is hard to scatter from said carbon fiber sheet, and said aramid fiber is also useful synthetic fiber since said aramid fiber is inexpensive and can be easily gotten.

In a case where said covering member(3) is a fiber material, synthetic resin may be impregnated therein. The same synthetic resin as used in said porous layer(7) may be used.

A manufacturing method of said cardboard(1) is described.

First, a manufacturing method for said core member(2) of said cardboard(1) is described.

Said core member(2) of said cardboard(1) of the present invention is molded into a prescribed shape. For instance, said core member(2B) of said cardboard(1), shown in Fig.14, is a core member(2B) made of a corrugated sheet and said corrugated sheet may be manufactured by a well known method, such as injection molding.

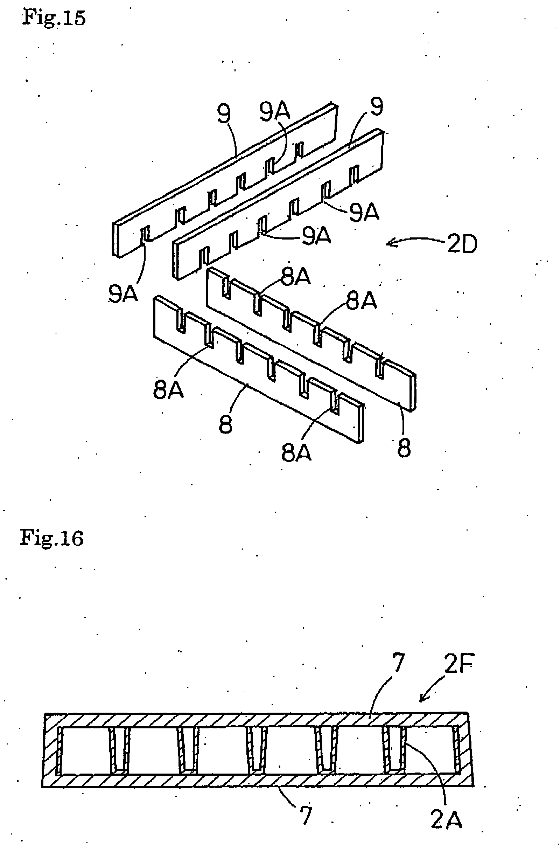

Said core member(2D) shown in Fig.7 is manufactured, for instance, by combining oblong base sheets(8), (9) made of engineering plastic or the like, where one of said oblong base sheets(8) has a plural number of slits(8A) from its upper edge, and the other oblong base sheet(9) has a plural number of slits(9A) from its lower edge and said slits(8A)(9A) of said oblong base sheets(5),(9) engage and combine said oblong base sheets(8), (9) as shown in Fig.15.

A manufacturing method for said core member(2) of said cardboard(1) shown in Figs.1 to 4 is described below.

First, a premolded sheet(2E) in which a plural number of projections(4) are arranged lengthwise and widthwise is molded by vacuum forming a sheet made of engineering plastic after which topsides of said projections(4) of said premolded sheet(2E) are each cut to produce a molded sheet(2A), with a number of formed tuberous projections(tube parts(6)) arranged lengthwise and widthwise.

Said manufacturing method for said core member(2) of said cardboard(1) is suitable for mass-production, but besides said method, vacuum forming, well known methods such as pressure forming, vacuum-pressure forming, press molding, injection molding or the like also can be applied.

A covering member(3) is attached to said core member(2) based upon the composition and shape of said core material(2)by a well known method.

Examples of the present invention are described below, but the present invention should not be limited only by said EXAMPLES.

### [EXAMPLE 1]

The cardboard(1A), shown in Fig.14, is used as an insulator. Said cardboard(1A) consists of a core member(2) and a pair of covering members(3). Both said core member(2), and said covering member(3) are made of polyethylene terephthalate.

### [EXAMPLE 2]

### (Sound absorbing test)

An engineering plastic cardboard(1) shown in Fig.1 to Fig.4 consists of a core member(2) which is a molded sheet(2A) made of a polymer alloy of polyphenylene ether/polystyrene/SEBS and forming a number of tube parts(6), and a pair of covering members(3) made of a polyester fiber non-woven fabric(unit weight 40g/m²) and a porous layer(7) (thickness 10mm, unit weight 60g/ m²). Said cardboard(1) is used as a sound absorbing material, and the sound absorbing effect of said cardboard(1) was determined.

The height(h) of said sound absorbing material is 15mm(h=15mm), and size (L×L) of the upper face of said tube part is 10mm×10mm (L×L=10mm× 10mm).

Sound waves having three different frequencies 800Hz, 1500Hz, and 2000Hz are each radiated at the upper face of said sound absorbing material to determine the sound absorbing abilities of the lower face at each frequency. The sound absorbing abilities for each frequency were 85% (800Hz), 98% (1500Hz), and 95% (2000Hz), confirming that said sound absorbing material has a good sound absorbing ability.

### (Heat resistance test)

Said sound absorbing material was kept at 150°Cfor 30 minutes, and then at room temperature (20°C) for 30 minutes. This procedure was repeated 10 times, after which the sound absorbing material was examined. From said examination , no degradation of the quality of said sound absorbing material such as deformation, warp, and the like was observed.

Further the same sound absorbing test was carried out on said sound absorbing material after said heat resistance test, and no change in its sound absorbing ability was noticed.

### (EXAMPLE 3)

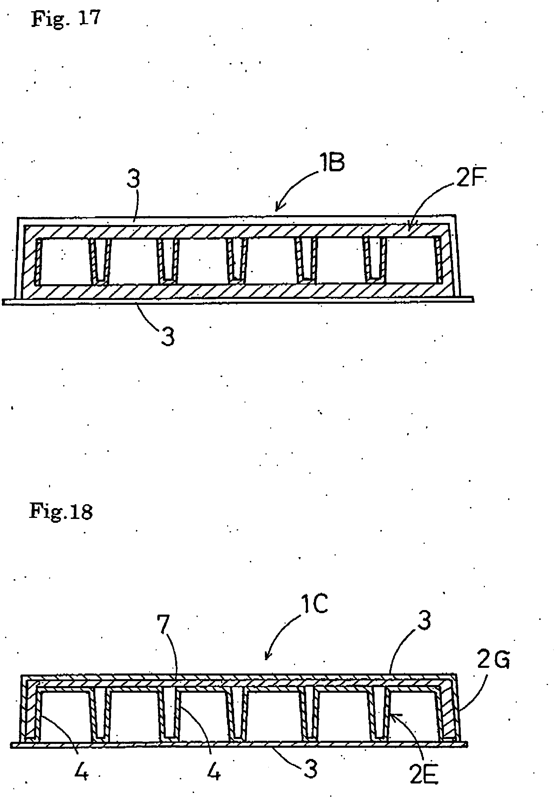

Using the core member (2F) as shown in Fig. 16, instead of said core member (2A) of EXAMPLE 2, a sound absorbing material made of cardboard (1B) was produced(See Fig. 17). Said core member (2F) consists of a molded sheet (2A) forming a number of tube parts (6) both sides of which are covered by a pair of said porous layers (7).

Said molded sheet (2A) of said core member (2F) was produced by molding a sheet of a polymer alloy made mainly of PPE, PA, and styrenic elastomer by the vacuum forming, and a porous layer (7) is made of a foamed polyurethane. Further, the covering member (3), covering said core member(2) is made of polyester fiber non-woven fabric, the same as in EXAMPLE 2.

Said sound absorbing material of this EXAMPLE also has a good sound absorbing abilities and heat resistance equal to said sound absorbing material of EXAMPLE 2.

### (EXAMPLE4)

A sound absorbing material, made of cardboard (1C), shown in Fig. 18 was produced.

As the core member of said sound absorbing material, the core member (2G) consists of a molded sheet (2E), forming a number of projections (4) which have a flat upper face, as shown in Figs. 8 and 9, and said molded sheet (2E) is covered by a porous layer(7).

Said molded sheet (2E) is made of a polymer alloy of PPE, PP, and SEPS and molded by vacuum forming, a covering member (3), which covers said core member (2G), being made of polyester fiber non-woven fabric.

Said sound absorbing material of EXAMPLE 4 has a good sound absorbing ability, and heat resistance the same as EXAMPLES 2 and 3.

COMPARISONS with said cardboard (1) of the present invention are below described. Said COMPARISONS relate to traditional sound absorbing materials.

### (COMPARISON 1)

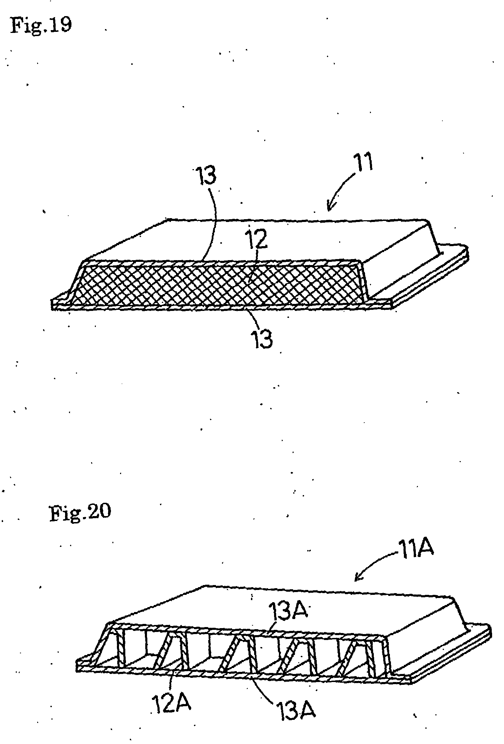

The sound absorbing material (11) shown in Fig. 19 consists of a core member (12) made of a porous material, such as a fiber layer, and a covering member (13), covering said core member (12). Said sound absorbing material (11) has had a problem in that said sound absorbing material (11) is heavy, despite its good sound absorbing abilities.

### (COMPARISON 2)

A sound absorbing material (11A) shown in Fig. 20 uses a core member (12A) made of polypropylene which is a common plastic. Said sound proof material (11A) is light weight, but has a poor heat resistance.

### (EXAMPLE 5)

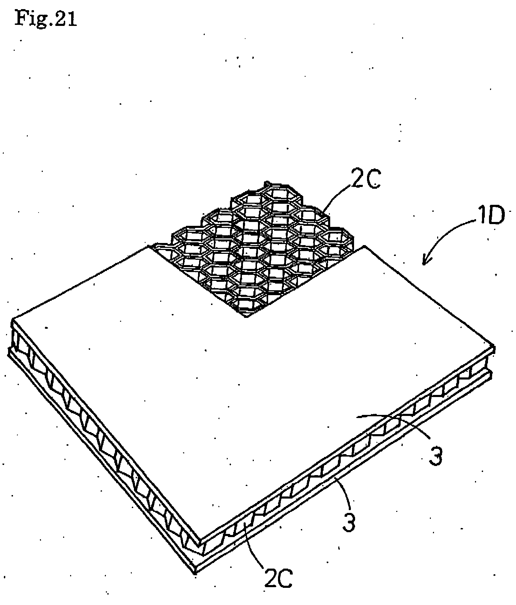

A cardboard (1D) shown in Fig. 21 was produced by covering a core member (2C) with a covering member (3), said core member (2C) having a honeycomb structure as shown in Fig. 6. Said core member (2C) is made of a polymer alloy containing polypropylene-polyethylene copolymer, PPE and SEBS as its main components, and said covering member (3) covering said core member (2C) is made of a polyester fiber non-woven fabric. Said cardboard (1D) of EXAMPLE 5 is used as a shock absorber to reduce impact during the transportation of articles.

### (EXAMPLE 6)

A core member (2D), as shown in Fig. 7, is made of a polymer alloy of polyphenylene ether/polypropylene/SEBS, to which a small amount of a compatibility aid agent is added, and a cardboard (1E) was produced by the covering of said core member (2D), with a carbon fiber non-woven fabric (3).

Both core member and covering member of said cardboard have good heat resistance, and said cardboard (1E) is useful as a sound absorbing member or a shock absorber which can be exposed to a high temperatures and used for such as hood insulator which is attached to the inside of the engine hood of a car, an outer dashboard silencer, or a dashboard silencer, the dashboard being arranged between the engine area and the cabin of the car or the like.

### (EXAMPLE 7)

In the cardboard (1D) shown in Fig. 21, the core member (2C) is made of a crystalline polyethylene terephthalate, and the covering member (3) is made of a non-woven fabric of polymethaphenylene isophthal amide fiber. Said cardboard (1D) also has a good heat resistance, and is useful as a shock absorber, or a sound absorbing material which can be exposed to high temperatures.

### (EXAMPLE 8)

In the cardboard(1E) shown in Fig(22), the core member(2D) is made of or syndiotactic polystyrene, and the covering member(3) is made of a polyarylate non-woven fabric. Said cardboard (1E) also has a good heat resistance, and is useful as a shock absorber, or a sound absorbing material which can be exposed to high temperatures.

Referring to the above described EXAMPLES, it is clear that said engineering plastic cardboard has a good heat resistance.

### INDUSTRIAL UTILITY

The engineering plastic cardboard of the present invention is useful as a sound absorbing material and a shock absorber, which can be exposed to a high temperature and used for such as a hood insulator which is attached to the inside of the engine hood of a car, a dashboard outer silencer and a dashboard silencer, said dashboard being arranged between the engine area and the cabin of a car.

## Claims

1. An engineering plastic cardboard consisting of a core member, and covering member(s) covering one or both sides(s) of said core member, wherein at least said core member is made of an engineering plastic, or a polymer alloy of said engineering plastic and a thermoplastic resin, or a polymer alloy of said engineering plastic, said thermoplastic resin and a rubber-like material

2. An engineering plastic cardboard in accordance with Claim 1, wherein said engineering plastic is of one or more kind(s) of plastic(s) selected from a group of polyamide(PA), polyester(PE), polyacetal(POM), polycarbonate(PC), polyethylene terephthalate(PET), polybutylene terephthalate(PBT), polysulfone(PSF), polyethersulfone(PES), polyphenylene ether(PPE), modified polyphenylene ether(Modified PPE), polyphenylene sulfide(PPS), polyarylate(PAR), polyether-etherketone(PEEK), polyamideimide(PAI), polyimide(PI), polyetherimide(PEI), polyaminobismaleimide, methylpentene copolymer(TPX), crystalline polyester, and stereoregular polyethylene

3. An engineering plastic cardboard in accordance with Claim 1 or 2, wherein said thermoplastic resin is of one or more kind(s) of thermoplastic resin(s) selected from a group of polystyrene, polyamide and polypropylene

4. An engineering plastic cardboard in accordance with Claim 1, wherein said rubber like material is a styrenic elastomer

5. An engineering plastic cardboard in accordance with Claim 1, wherein a compatibility aid agent is further added to said polymer alloy

6. An engineering plastic cardboard in accordance with any of Claims 1 to 5 wherein said core member is a corrugated sheet

7. An engineering plastic cardboard in accordance with any of Claims 1 to 5, wherein said core member is a honeycomb material

8. An engineering plastic cardboard in accordance with any of Claims 1 to 5, wherein said core member is a molded sheet forming a number of projections

9. An engineering plastic cardboard in accordance with any of Claims 1 to 5, wherein said core member has a honeycomb body having grid structure

10. An engineering plastic cardboard in accordance with any of Claims 1 to 8, wherein said covering member is a porous material

11. An engineering plastic cardboard in accordance with any of Claims 1 to 9, wherein said covering member is made of a heat resistant material

12. An engineering plastic cardboard in accordance with Claim 11, wherein said heat resistant material is a carbon fiber and/or aramid fiber
